# EUROPÄISCHE PATENTSCHRIFT

(11) **EP 3 210 915 B1**
(45) Veröffentlichungstag und Bekanntmachung des Hinweises auf die Patenterteilung: **26.09.2018**
(21) Anmeldenummer: 17000281.0
(22) Anmeldetag: 22.02.2017
(51) Int. Cl.: B65G 15/52, F16G 3/06, F16G 3/08, A01F 15/18

(54) **FÖRDERGURT UND LANDWIRTSCHAFTLICHE ERNTEMASCHINE MIT EINEM FÖRDERGURT**
CONVEYOR BELT AND AGRICULTURAL HARVESTER WITH A CONVEYOR BELT
CONVOYEUR À BANDE ET MACHINE DE RÉCOLTE AVEC UN TEL CONVOYEUR

(30) Priorität: 26.02.2016 DE 102016002144
(43) Veröffentlichungstag der Anmeldung: 30.08.2017
(73) Patentinhaber: Maschinenfabrik Bernard Krone GmbH & Co. KG, 48480 Spelle (DE)
(72) Erfinder: Hülsmann, Simon, 49584 Fürstenau-Hollenstede (DE); Lehmann, Marco, 48477 Hörstel (DE); Martensen, Klaus, 48477 Hörstel (DE); Wermes, Henrik, 49733 Haren (Ems)/Wesuwe (DE)

(56) Entgegenhaltungen:
- WO-A1-2012/038155
- DE-A1-102004 023 704
- DE-A1-102010 054 186
- DE-U1- 29 715 387
- DE-U1-202011 002 846
- GB-A- 2 290 515
- JP-A- S 585 554
- US-A- 3 181 690
- US-A- 4 757 576
- US-A- 5 348 782
- US-A1- 2004 195 079

## Beschreibung

Die Erfindung betrifft einen Fördergurt oder ein Fördergurtsegment aus einem elastomeren Werkstoff mit einer Festigkeitsträgerlage aus in Längsrichtung des Fördergurtes gerichtet angeordneten Stahlseilen nach dem Oberbegriff des Anspruchs 1 sowie einer landwirtschaftlichen Erntemaschine zum Ernten von landwirtschaftlichen Feldfrüchten oder dgl. Erntegut nach dem Oberbegriff des Anspruchs 13. Derartige Fördergurte und deren Verwendung sind aus zahlreichen Anwendungsfällen bekannt.

Aus der WO 2012/038155 A1 ist ein Fördergurt oder ein Fördergurtsegment bekannt geworden, bei dem eine Festigkeitsträgerlage aus in Längsrichtung des Fördergurtes verlaufenden, parallel zueinander ausgerichteten Stahlseilen für eine hinreichend hohe Zugkraft sorgt, die mit derartigen Fördergurten übertragen werden kann. An der Ober-bzw. Unterseite ist die Festigkeitsträgerlage mit Deckschichten aus einem elastomeren Werkstoff abgedeckt. Zur Verbindung der zwei Enden des Fördergurtes oder der Enden von zumindest zwei Fördergurtsegmenten schlägt die Schrift Scharnierplatten vor, die mit entsprechenden Längsbohrungen zur Aufnahme der Stahlseile versehen sind. Zur Fixierung der Stahlseile in den Längsbohrungen der Scharnierplatten ist ein Verpressen der Scharnierplatten vorgesehen. Aufgrund der Pressverbindungen in den Scharnierplatten zur Befestigung der Drahtseile mit den Scharnierplatten ergibt sich eine eingeschränkte Flexibilität des Fördergurtes, insbesondere bei der Umlenkung an Führungs- und Umlenkrollen mit kleinen Durchmessern.

Weiterhin ist aus der DE 10 2004 023 704 A1 eine landwirtschaftliche Erntemaschine in der Art einer Rundballenpresse zum Aufnehmen und Pressen von landwirtschaftlichem Erntegut bekannt geworden, bei der eine Ballenformeinrichtung aus zwei Antriebsriemen mit dazwischen angebrachten Pressstäben gebildet ist. Aus der Erkenntnis heraus, dass es sich bei den betreffenden Antriebsriemen um Endlosriemen handelt, werden in der Praxis eine Vielzahl unterschiedlicher Riemenlängen für verschiedene Ballengrößen benötigt, die jeweils vorzuhalten sind. Eine Anordnung gemäss dem Oberbegriff des Anspruchs 1 geht aus den beiden Druckschriften DE-U1-297 15 387 und US-A1-2004/0195079 hervor.

Aufgabe der Erfindung ist es daher, einen Fördergurt aus Fördergurtsegmenten bereit zu stellen, der in einer einfachen und kostengünstigen Weise her- bzw. zusammenzustellen ist, dabei eine optimale Flexibilität aufweist und damit die Verwendung in landwirtschaftlichen Erntemaschinen vereinfacht.

Erfindungsgemäß wird die genannte Aufgabe durch einen Fördergurt oder Fördergurtsegment gemäß Anspruch 1 sowie durch eine landwirtschaftliche Erntemaschine zum Ernten von Feldfrüchten nach Anspruch 13 gelöst. Bevorzugte Ausgestaltungen der Erfindung sind Gegenstand der abhängigen Ansprüche.

Nach der Erfindung wird ein Fördergurt oder Fördergurtsegment aus einem elastomeren Werkstoff vorgeschlagen, mit einer Festigkeitsträgerlage aus in Längsrichtung des Fördergurtes oder des Fördergurtsegmentes ausgerichtet angeordneten Stahlseilen, wobei jedes Fördergurt- oder Fördergurtsegmentende einen Querriegel aufweist, in dem die Enden der Stahlseile kraft- oder formschlüssig arretiert sind, wobei die Querriegel zweier Fördergurt- oder Fördergurtsegmentenden über ein lösbares Verschlussglied in einer starren Zuordnung zueinander miteinander koppelbar sind, Es wird damit ein Fördergurt zur Verfügung gestellt, der aus zumindest einem Fördergurtsegment gebildet ist, wobei die jeweiligen Fördergurtsegmentenden in einer äußerst kompakten Weise miteinander verbunden sind, so dass dadurch eine Einschränkung der Flexibilität des Fördergurtes insbesondere bei Umlenkung an Führungs- oder Antriebsrollen mit kleinen Durchmessern vermieden wird. Als Querriegel ausgebildete Endstücke des Fördergurtes oder der Fördergurtsegmente weisen auf ihrer Lange verteilt Bohrungen auf, in denen die Enden der Drahtseile durch Fügeverfahren wie Löten, Kleben, Schweißen, Pressen oder Klemmen mit dem Querriegel zugfest verbunden sind. Aufgrund dieser Verbindungstechniken benötigt ein derartiger Querriegel nur einen äußerst kompakten Querschnitt. Vorteilhafterweise kann der erforderliche Querschnitt bei einer quadratischen Querschnittsfläche bei einer Kantenlänge von 10 bis 15 mm liegen. Andere Querschnittsflächen können jedoch ebenso eingesetzt werden.

Mit dem erfindungsgemäßen Verschlussglied wird eine Koppelung der Querriegel erreicht, bei der eine starre Zuordnung der Querriegel zueinander eintritt. Unter einer starren Zuordnung versteht die Erfindung, dass eine irgendwie geartete Bewegung zweier Querriegel relativ zueinander, die von dem Verschlussglied zumindest teilweise umschlossen sind, nicht möglich ist Zur Koppelung zweier Querriegel ist das Verschlussglied aus zumindest zwei Abschnitten gebildet, die lösbar miteinander verbunden sind. Bei den Abschnitten des Verschlussgliedes kann es sich um einen unteren und einen oberen Abschnitt handeln, die zwei benachbarte Querriegel von Fördergurtsegmenten, die beispielsweise zu einem Fördergurt zusammengefügt werden sollen, zwischen sich aufnehmen und dadurch eine Koppelung mit starrer Zuordnung herbeiführen. Zur Herbeiführung einer lösbaren Verbindung zwischen den Abschnitten eines Verschlussgliedes werden Befestigungsmittel verwendet, die beispielsweise als Befestigungsschrauben ausgeführt sind.

Zur Koppelung zweier Querriegel in einem Verschlussglied weisen die Abschnitte des Verschlussgliedes Ausnehmungen auf, deren geometrische Abmessungen so gestaltet sind, dass die Querriegel formschlüssig in die Ausnehmungen eingefügt werden können. Vertieft in die Oberfläche der Abschnitte des Verschlussgliedes eingebrachte Nuten eignen sich in besonderer Weise als Ausnehmungen zur Aufnahme der Querriegel. Vorzugsweise liegt die Tiefe der Nuten dabei in einem Bereich, der 10 bis 50 % der Materialstärke der Abschnitte des Verschlussgliedes entspricht.

Gemäss der Erfindung ist es vorgesehen, dass die lösbar gestalteten Verschlussglieder zur Koppelung von Querriegeln der Fördergurtsegmente eines Fördergurtes als Mittel zur Aufnahme und Befestigung von Stabelementen eingesetzt sind. Dazu können sich an die Abschnitte eines Verschlussgliedes zur Aufnahme der Querriegel Laschen anschließen, an denen Stabelemente angebracht werden können, die beispielsweise an einer Ballenformeinrichtung einer Rundballenpresse oder an Sieb- und Förderbändern eines Kartoffelroders einsetzbar sind.

Zur Erleichterung beim Zusammenfügen zweier Enden von Fördergurtsegmenten oder zweier Enden eines Fördergurtes können die Querriegel an der dem flexiblen Gurtelement abgewandten Seite mit Mitteln zum hilfsweisen Zusammenkoppeln ausgerüstet sein. Mit den Mitteln zum hilfsweisen Zusammenkoppeln kann eine vorläufige Verbindung zwischen zwei Querriegeln geschaffen werden mit dem Ziel, dass dann in einfacher Weise an dieser Kopplungsstelle die beiden Abschnitte des Verschlussgliedes montiert werden können. In einer vorteilhaften Ausführungsform kann als Mittel zum hilfsweisen Zusammenkoppeln ein schwalbenschwanzförmiger Vorsprung vorgesehen sein, der in eine schwalbenschwanzförmige Aussparung einführbar ist. Zur Vereinheitlichung der Koppelstellen zwischen den jeweiligen Fördergurtsegmenten ist es dann von Vorteil, wenn an jedem Querriegel ein schwalbenschwanzförmiger Vorsprung und eine schwalbenschwanzförmige Aussparung vorhanden sind. In Weiterbildungen der Erfindung sind auch andere Ausführungsformen zum hilfsweisen Zusammenkoppeln denkbar.

In weiterer Ausgestaltung der Erfindung wird eine landwirtschaftliche Erntemaschine zum Ernten von landwirtschaftlichen Feldfrüchten oder dgl. Erntegut mit zumindest einer Vorrichtung zur Bearbeitung und/oder Förderung der Feldfrüchten vorgeschlagen, bei der die Vorrichtung zur Bearbeitung und/oder Förderung der Feldfrüchte zumindest einen Fördergurt oder ein Fördergurtsegment nach den Merkmalen der Ansprüche 1 bis 12 umfasst, an dem zumindest annähernd quer zur Laufrichtung des Fördergurtes oder des Fördergurtsegmentes ausgerichtete Stabelemente angebracht sind. Es ist erfindungsgemäß also vorgesehen, aus Fördergurtsegmenten mit gleicher oder unterschiedlicher Länge, Fördergurte zusammen zu stellen. Diese Fördergurte können dann in einer Anwendung, bei der zwischen zwei Fördergurten als Förder- oder Pressstäbe ausgebildete Stabelemente angebracht sind, eine Ballenformeinrichtung ausbilden, die eine Ballenformkammer zur Formung von rollenförmigen Ballen umgrenzt. Durch eine derartige Gestaltung der Ballenformeinrichtung wird es ermöglicht, dass selbst Fördergurte mit unterschiedlichen Längen für verschiedenste Ballengrößen aus standardisierten Fördergurtsegmenten zusammengestellt werden können. Eine kostenintensive Vorhaltung von Fördergurten mit verschiedenen Längen kann damit entfallen. Der Herstellungsprozess kann damit deutlich vereinfacht werden.

Nachfolgend wird ein vorteilhaftes Ausführungsbeispiel der Erfindung anhand einer Zeichnung beschrieben. In der Zeichnung zeigt;
- Fig. 1:: eine Perspektivansicht eines Fördergurtes nach der Erfindung;
- Fig. 2:: eine Perspektivansicht eines Fördergurtsegmentes aus einem Fördergurt nach Fig. 1 in einer teilweise abgebrochenen Darstellung;
- Fig. 3:: eine Schnittdarstellung einer Koppelstelle von zwei Fördergurtsegmenten mit einem Schnittverlauf parallel zur Lauffläche des Fördergurtes;
- Fig. 4:: eine Perspektivansicht von zwei Fördergurtsegmenten während eines hilfsweisen Zusammenfügevorganges;
- Fig. 5:: eine Schnittdarstellung einer Koppelstelle von zwei Fördergurtsegmenten mit einem Schnittverlauf parallel zur Seitenflanke des Fördergurtes;
- Fig. 6:: eine schematische Darstellung einer landwirtschaftlichen Erntemaschine mit einer Ballenformeinrichtung;
- Fig. 7:: eine Perspektivansicht einer Ballenformeinrichtung nach Fig. 6;

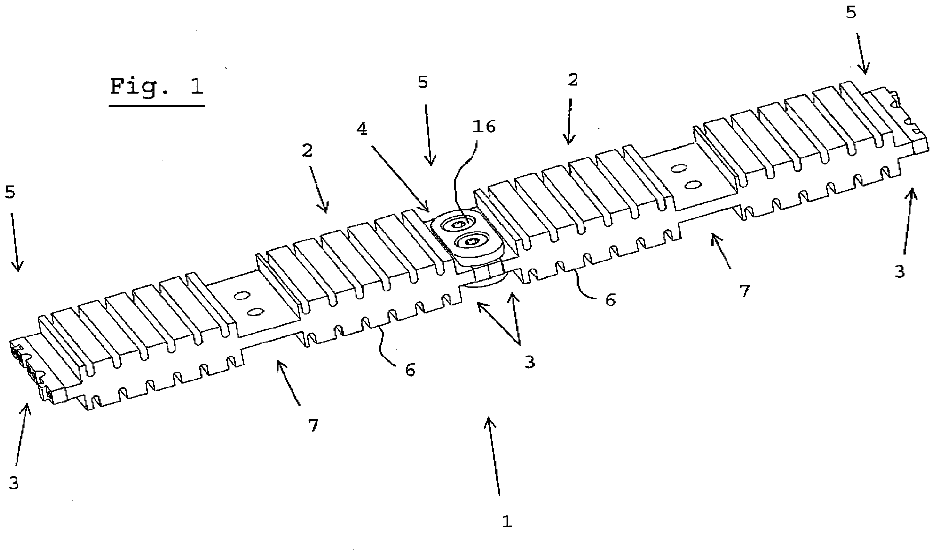

In der Fig. 1 Ist ein Fördergurt 1 nach der Erfindung näher veranschaulicht, der aus zumindest zwei Fördergurtsegmenten 2 gebildet ist. Weitere vorteilhafte Ausführungsformen eines Fördergurtes 1 können jedoch auch so gestaltet sein, dass eine Mehrzahl standardisierter Fördergurtsegmente 2 zu einem Fördergurt 1 zusammen gefügt sind. Als Verbindung zwischen den Fördergurt- oder Fördergurtsegmentenden 3 dient ein lösbares Verschlussglied 4, mit dem an einer Koppelstelle 5 eine Koppelung der Fördergurt- oder Fördergurtsegmentenden 3 mit einer starren Zuordnung zueinander bewirkt wird. Zwischen zwei Koppelstellen 5 umfasst ein Fördergurtsegment 2 ein flexibles Gurtelement 6, welches je nach Verwendungszweck mit unterschiedlichen Profilierungen ausgestattet sein kann. Weiterhin ist der Fig. 1 zu entnehmen, dass in dem flexiblen Gurtelement 6 auch Anschlussstellen 7 für Stabelemente eingebracht sein können, wenn der Fördergurt 1 durch eine Bestückung mit zumindest annähernd quer zur Laufrichtung des Fördergurtes 1 ausgerichteten Stabelementen als eine Vorrichtung zur Bearbeitung und/oder Förderung von Feldfrüchten oder dgl. Erntegut eingesetzt werden soll.

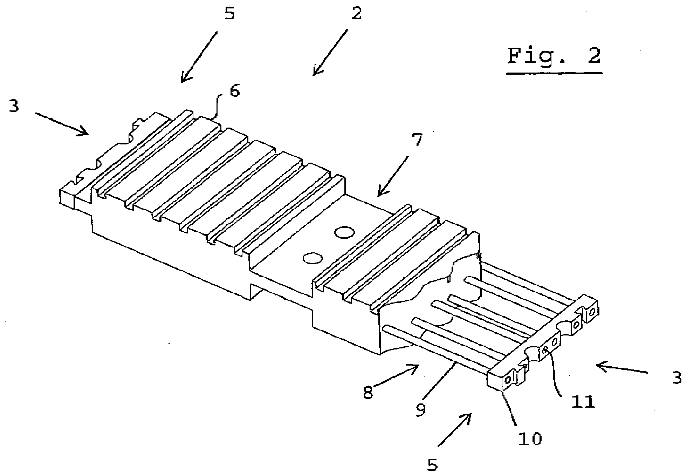

Eine detaillierte Wiedergabe des Aufbaus eines erfindungsgemäßen Fördergurtsegmentes 2 geht aus der Fig. 2 hervor. Ausgehend von einer im Inneren des flexiblen Gurtelementes 6 befindlichen Festigkeitsträgerlage 8 aus Stahlseilen 9 umfasst das flexible Gurtelement 6 obere und untere Deckschichten, die mit verschiedensten Profilierungen aber auch ohne Profilierungen ausgestaltet sein können. An jedem Fördergurtsegmentende 3 eines Fördergurtsegmentes 2 ist dieses mit einem Querriegel 10 versehen, der im Hinblick auf seine Längserstreckung quer zur Laufrichtung des Fördergurtsegmentes 2 ausgerichtet ist und der Koppelung zweier Fördergurtsegmente 2 oder der Schließung eines Fördergurtsegmentes 2 zu einem Fördergurt 1 dient. Der Querriegel 10 weist in Laufrichtung des Fördergurtsegmentes 2 eine Mehrzahl von Bohrungen 11 auf, in den die Enden der Stahlseile 9 durch Fügeverfahren wie Löten, Kleben, Schweißen, Pressen oder Klemmen zugfest mit dem Querriegel 10 verbunden sind. Weiterhin zeigt die Darstellung in Fig. 2, dass der Querriegel einen vorzugsweise quadratischen Querschnitt aufweist, dessen Kantenlängen in einem Bereich von 10 bis 15 mm liegen können. Damit liegt dem Querriegel 10, der zur Koppelung mit einem weiteren Querriegel 10 eines weiteren Fördergurtsegmentes 2 in einer starren Zuordnung zueinander zu verbinden ist, eine äußerst kompakte Baugröße zugrunde, welche Einschränkungen der Flexibilität bei Umlenkungen an Führungs- und Antriebsrollen sicher ausschließt.

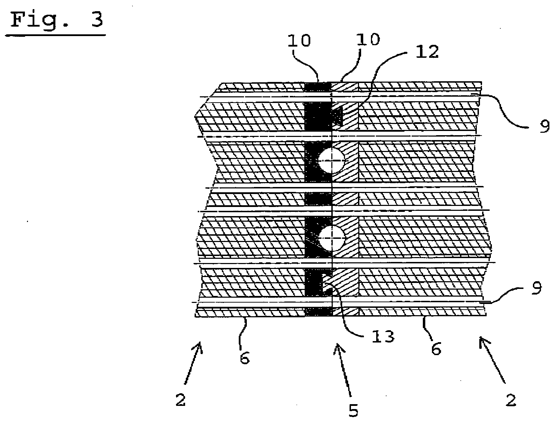

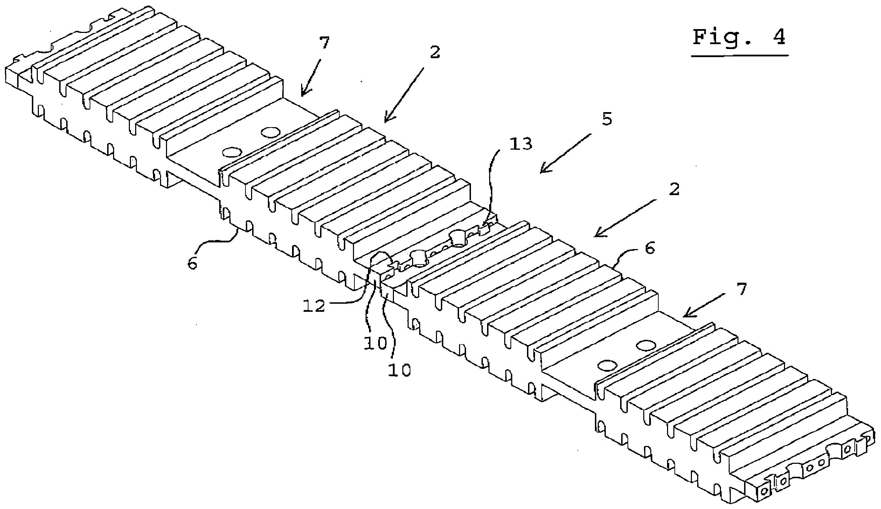

Die Darstellungen der Fig. 3 und der Fig. 4 zeigt zwei Fördergurtsegmente 2 in einem Zustand einer hilfsweisen Kopplung, die dazu dient, den Anbringungs- und Befestigungsvorgang eines Verschlussgliedes 4 dadurch zu erleichtern, dass eventuelle Zugkräfte, die aufgrund der Gewichtseinwirkung eines Fördergurtabschnittes den Anbringungs- und Befestigungsvorgang eines Verschlussgliedes 4 behindern, bereits aufgefangen werden. Wenn die hilfsweise Kopplung zweier Fördergurtsegmente vollzogen ist, kann das Verschlussglied 4 in Ruhe angebracht und befestigt werden. Dazu kann jeder Querriegel 10 an der dem flexiblen Gurtelement 6 abgewandten Seite mit einer schwalbenschwanzförmigen Aussparung 12 sowie mit einem schwalbenschwanzförmigen Vorsprung 13 ausgerüstet sein. Ein Querriegel mit einer spiegelbildlichen Bestückung durch den schwalbenschwanzförmigen Vorsprung 13 und die schwalbenschwanzförmige Aussparung 12 kann dann in einfacher Weise mit dem ersteren Querriegel 10 hilfsweise gekoppelt werden.

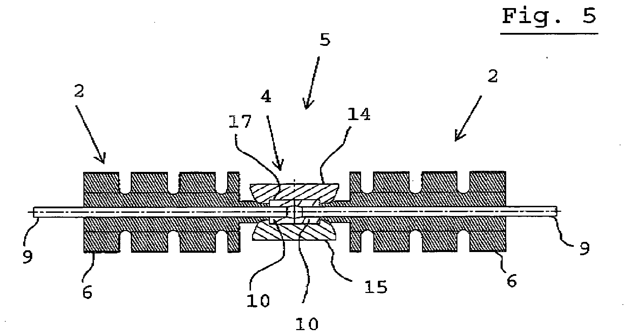

Fig. 5 zeigt in einer Schnittdarstellung die Koppelstelle 5 in einem Zustand, in dem zwei Fördergurtsegmente 2 durch die Einwirkung des erfindungsgemäßen Verschlussgliedes miteinander verbunden sind. Die dem flexiblen Gurtelement 6 abgewandten Seiten des Querriegels 10 liegen im gekoppelten Zustand aneinander an, so dass durch das Übergreifen der Abschnitte 14,15 des Verschlussgliedes 4 an der oberen und an der unteren Seite der Fördergurtsegmente 2 eine Verbindung entsteht, bei der eine starre Zuordnung der Querriegel 10 zueinander eintritt. Werden nun die beiden Abschnitte 14,15 des Verschlussgliedes 4 gegeneinander verspannt, so entsteht eine formschlüssige Verbindung in Fördergurten, die selbst den schwierigen Umgebungsbedingungen beim Einsatz landwirtschaftlicher Erntemaschinen standhält. Zur Verspannung der Abschnitte 14,15 des Verschlussgliedes 4 gegeneinander können Befestigungsschrauben 16 eingesetzt sein, wie sie bereits aus Fig. 1 hervorgehen. Das Übergreifen der Abschnitte 14,15 des Verschlussgliedes 4 wird dadurch ermöglicht, dass die Abschnitte 14,15 mit Ausnehmungen 17 versehen sind, in die zwei Querriegel 10 hinsichtlich ihrer Querschnittsabmessungen formschlüssig eingefügt werden können.

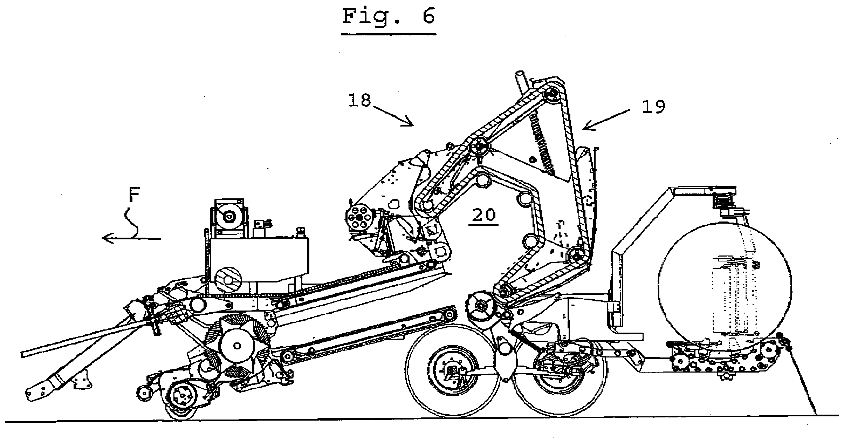

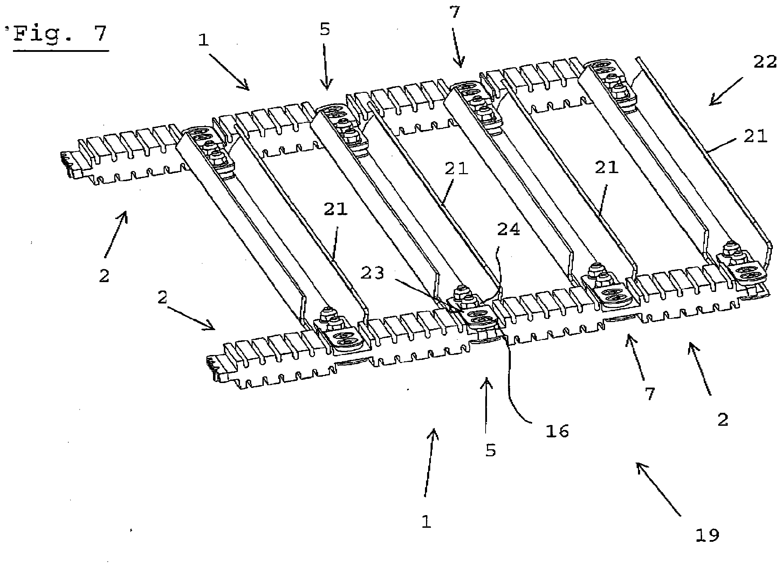

Ein Ausführungsbeispiel einer landwirtschaftlichen Erntemaschine, bei der die erfindungsgemäßen Fördergurte 1 zur Anwendung kommen können, ist in Fig. 6 wiedergegeben. Dabei handelt es sich um eine Rundballenpresse zur Ernte von halmförmigem Erntegut, bei der das aufgenommene Erntegut über eine Vorrichtung 18 zur Bearbeitung und/oder Förderung des Erntegutes in Form einer Ballenformeinrichtung 19 zu rollenförmigen Ballen in einer Ballenformkammer 20 verdichtet wird. Ein detaillierte Darstellung des Ballenformeinrichtung 19 ist aus der Fig. 7 zu entnehmen. Die dort dargestellte Ballenformeinrichtung 19 besteht aus zwei Fördergurten 1, zwischen denen sich als Förder- und Pressstäbe 21 ausgeführte Stabelemente 22 erstrecken. Etwa im mittleren Bereich der dargestellten Ballenformeinrichtung 19 befinden sich zwei Koppelstellen 5, an denen sowohl zwei Fördergurtsegmente 2 miteinander gekoppelt sind, als auch zwei Fördergurtsegmente 2 mit einem Förder- und Pressstab 21 verbunden sind. Dazu dient ein Verschlussglied 23, welches über entsprechende Abschnitte 14, 15 des Verschlussgliedes 4 (Fig. 5) verfügt und an dem jedoch zur Aufnahme der Förder- und Pressstäbe 21 Laschen 24 angebracht sind.

## Patentansprüche

1. Fördergurt oder Fördergurtsegment (1,2) aus einem elastomeren Werkstoff mit einer Festigkeitsträgerlage (8) aus in Längsrichtung des Fördergurtes oder des Fördergurtsegmentes (1,2) ausgerichtet angeordneten Stahlseilen (9), wobei jedes Fördergurt- oder Fördergurtsegmentende (3) einen Querriegel aufweist, in dem die Enden der Stahlseile (9) kraft- oder formschlüssig arretiert sind und die Querriegel (10) zweier Fördergurt- oder Fördergurtsegmentenden (3) über ein lösbares Verschlussglied (4,23) in einer starren Zuordnung zueinander miteinander koppelbar sind, **dadurch gekennzeichnet, dass** das lösbare Verschlussglied (23) zur Koppelung der Querriegel (10) zweier Fördergurt- oder Fördergurtsegmentenden (3) Mittel zur Aufnahme und Befestigung von zumindest annähernd quer zur Laufrichtung des Fördergurtes oder des Fördergurtsegmentes (1,2) ausgerichteten Stabelementen (22) aufweist.

2. Fördergurt oder Fördergurtsegment (1,2) nach Anspruch 1, **dadurch gekennzeichnet, dass** das lösbares Verschlussglied (4,23) zur starren Koppelung der Querriegel (10) zweier Fördergurt- oder Fördergurtsegmentenden (3) die Querriegel (10) zumindest teilweise umschließt.

3. Fördergurt oder Fördergurtsegment (1,2) nach Anspruch 1 oder 2, **dadurch gekennzeichnet, dass** das lösbares Verschlussglied (4,23) zur Koppelung der Querriegel (10) zweier Fördergurt- oder Fördergurtsegmentenden (3) aus zumindest zwei Abschnitten (14,15) gebildet ist, welche über Befestigungsmittel miteinander verbindbar sind.

4. Fördergurt oder Fördergurtsegment (1,2) nach Anspruch 3, **dadurch gekennzeichnet, dass** die Befestigungsmittel als Befestigungsschrauben (16) ausgeführt sind, welche die Querriegel (10) zumindest teilweise durchsetzen.

5. Fördergurt oder Fördergurtsegment (1,2) nach zumindest einem der Ansprüche 1 bis 4, **dadurch gekennzeichnet, dass** das lösbares Verschlussglied (4,23) zur Koppelung der Querriegel (10) zweier Fördergurt- oder Fördergurtsegmentenden (3) aus zwei Abschnitten (14,15) gebildet ist, welche eine formschlüssige Verbindung zwischen den Abschnitten (14,15) des Verschlussgliedes (4,23) und den Querriegeln (10) aufbauen.

6. Fördergurt oder Fördergurtsegment (1,2) nach zumindest einem der Ansprüche 1 bis 4, **dadurch gekennzeichnet, dass** das lösbares Verschlussglied (4,23) zur Koppelung der Querriegel (10) zweier Fördergurt- oder Fördergurtsegmentenden (3) aus zwei Abschnitten gebildet ist, wobei eine kraftschlüssige Verbindung zwischen den Abschnitten des Verschlussgliedes und den Querriegeln erreichbar ist.

7. Fördergurt oder Fördergurtsegment (1,2) nach zumindest einem der Ansprüche 1 bis 5, **dadurch gekennzeichnet, dass** die Abschnitte (14,15) des lösbaren Verschlussgliedes (4,23) an ihren einander zugewandten Seiten Ausnehmungen (17) aufweisen, deren Größe an die Abmessungen von zwei aneinander anliegenden Querriegeln (10) angepasst ist.

8. Fördergurt oder Fördergurtsegment (1,2) nach Anspruch 7, **dadurch gekennzeichnet, dass** die Ausnehmungen (17) eine Tiefe aufweisen, die in einem Bereich von 10 bis 50 % der Materialstärke der Abschnitte (14,15) des Verschlussgliedes (4,23) liegt.

9. Fördergurt oder Fördergurtsegment (1,2) nach Anspruch 1, **dadurch gekennzeichnet, dass** die Mittel zur Aufnahme und Befestigung von zumindest annähernd quer zur Laufrichtung des Fördergurtes oder des Fördergurtsegmentes (1,2) ausgerichteten Stabelementen (22) als Laschen (24) ausgebildet sind, in denen die Abschnitte (14,15) des lösbaren Verschlussgliedes (4) eingeschlossen sind.

10. Fördergurt oder Fördergurtsegment (1,2) nach zumindest einem der Ansprüche 1 bis 10, **dadurch gekennzeichnet, dass** die Querriegel (10) eines Fördergurtes oder eines Fördergurtsegmentes (1,2) an der dem flexiblen Gurtelement (6) abgewandten Seite Mittel zum hilfsweisen Zusammenkoppeln aufweisen.

11. Fördergurt oder Fördergurtsegment (1,2) nach Anspruch 10, **dadurch gekennzeichnet, dass** die Mittel zum hilfsweisen Zusammenkoppeln der Querriegel (10) als ein schwalbenschwanzförmiger Vorsprung (13) ausgeführt sind, welcher in eine schwalbenschwanzförmige Aussparung (12) einführbar ist.

12. Fördergurt oder Fördergurtsegment (1,2) nach Anspruch 10 und 11, **dadurch gekennzeichnet, dass** jeder Querriegel (10) an der dem flexiblen Gurtelement (6) abgewandten Seite einen schwalbenschwanzförmiger Vorsprung (13) und eine schwalbenschwanzförmige Aussparung (12) aufweist.

13. Landwirtschaftliche Erntemaschine zum Ernten von landwirtschaftlichen Feldfrüchten oder dgl. Erntegut mit zumindest einer Vorrichtung zur Bearbeitung und/oder Förderung der Feldfrüchten, **dadurch gekennzeichnet, dass** die Vorrichtung zur Bearbeitung und/oder Förderung (18) der Feldfrüchte zumindest einen Fördergurt oder ein Fördergurtsegment (1,2) nach den Merkmalen der Ansprüche 1 bis 12 umfasst, an dem zumindest annähernd quer zur Laufrichtung des Fördergurtes oder des Fördergurtsegmentes (1,2) ausgerichtete Stabelemente (22) angebracht sind.

14. Landwirtschaftliche Erntemaschine zum Ernten von landwirtschaftlichen Feldfrüchten nach Anspruch 13, **dadurch gekennzeichnet, dass** die Vorrichtung zur Bearbeitung und/oder Förderung (18) dazu eingerichtet ist, aufgenommenes Erntegut über eine, in eine Umlaufbewegung versetzbare Ballenformeinrichtung (19) in einer Ballenformkammer (20) zu rollenförmigen Ballen zu verdichten.

15. Landwirtschaftliche Erntemaschine zum Ernten von landwirtschaftlichen Feldfrüchten nach Anspruch 13 und 14, **dadurch gekennzeichnet, dass** die Ballenformeinrichtung (19) aus zwei Fördergurten (1) gebildet ist, zwischen denen Förder- oder Pressstäbe (21) angeordnet sind.

16. Landwirtschaftliche Erntemaschine zum Ernten von landwirtschaftlichen Feldfrüchten nach zumindest einem der Ansprüche 13 bis 15, **dadurch gekennzeichnet, dass** die Fördergurte (1) der Ballenformeinrichtung (19) aus zumindest zwei Fördergurtsegmenten (2) bestehen.

17. Landwirtschaftliche Erntemaschine zum Ernten von landwirtschaftlichen Feldfrüchten nach zumindest einem der Ansprüche 13 bis 16, **dadurch gekennzeichnet, dass** an Koppelstellen (5) zweier Fördergurt- oder Fördergurtsegment-enden (3) die Förder- oder Pressstäbe (21) über die lösbaren Verschlussglieder (23) schraubbar mit den Fördergurtsegmenten (2) verbunden sind.

## Claims

1. Conveyor belt or conveyor belt segment (1, 2) made of an elastomer material comprising a reinforcing support layer (8) made of steel cables (9) oriented in the longitudinal direction of the conveyor belt or conveyor belt segment (1, 2), each conveyor belt end or conveyor belt segment end (3) comprising a crossbar in which the ends of the steel cables (9) are locked in position in a force-locked or interlocking manner, and it being possible to couple the crossbars (10) of two conveyor belt ends or conveyor belt segment ends (3) rigidly to one another by means of a detachable connecting link (4, 23), **characterised in that** the detachable connecting link (23) comprises means for receiving and fastening rod elements (22) that are oriented at least approximately transversely to the running direction of the conveyor belt or conveyor belt segment (1, 2) in order to couple the crossbars (10) of two conveyor belt ends or conveyor belt segment ends (3).

2. Conveyor belt or conveyor belt segment (1, 2) according to claim 1, **characterised in that** the detachable connecting link (4, 23) for rigidly coupling the crossbars (10) of two conveyor belt ends or conveyor belt segment ends (3) surrounds the crossbars (10) at least in part.

3. Conveyor belt or conveyor belt segment (1, 2) according to either claim 1 or claim 2, **characterised in that** the detachable connecting link (4, 23) for coupling the crossbars (10) of two conveyor belt ends or conveyor belt segment ends (3) is formed by two portions (14, 15) that can be interconnected by fastening means.

4. Conveyor belt or conveyor belt segment (1, 2) according to claim 3, **characterised in that** the fastening means are designed as fastening screws (16) that penetrate the crossbars (10) at least in part.

5. Conveyor belt or conveyor belt segment (1, 2) according to at least one of claims 1 to 4, **characterised in that** the detachable connecting link (4, 23) for coupling the crossbars (10) of two conveyor belt ends or conveyor belt segment ends (3) is formed by two portions (14, 15) that establish an interlocking connection between the portions (14, 15) of the connecting link (4, 23) and the crossbars (10).

6. Conveyor belt or conveyor belt segment (1, 2) according to at least one of claims 1 to 4, **characterised in that** the detachable connecting link (4, 23) for coupling the crossbars (10) of two conveyor belt ends or conveyor belt segment ends (3) is formed by two portions, it being possible to achieve a force-locked connection between the portions of the connecting link and the crossbars.

7. Conveyor belt or conveyor belt segment (1, 2) according to at least one of claims 1 to 5, **characterised in that** the portions (14, 15) of the detachable connecting link (4, 23) comprise recesses (17) on the sides thereof that face one another, the size of which recesses corresponds to the dimensions of two abutting crossbars (10).

8. Conveyor belt or conveyor belt segment (1, 2) according to claim 7, **characterised in that** the recesses (17) have a depth that is within a range of from 10 to 50% of the material thickness of the portions (14, 15) of the connecting link (4, 23).

9. Conveyor belt or conveyor belt segment (1, 2) according to claim 1, **characterised in that** the means for receiving and fastening rod elements (22) that are oriented at least approximately transversely to the running direction of the conveyor belt or conveyor belt segment (1, 2) are designed as tabs (24), in which the portions (14, 15) of the detachable connecting link (4) are embedded.

10. Conveyor belt or conveyor belt segment (1, 2) according to at least one of claims 1 to 10, **characterised in that** the crossbars (10) of a conveyor belt or conveyor belt segment (1, 2) comprise means for alternative coupling on the side facing away from the flexible belt element (6).

11. Conveyor belt or conveyor belt segment (1, 2) according to claim 10, **characterised in that** the means for alternative coupling of the crossbars (10) are designed as a dovetail-shaped projection (13) that can be inserted into a dovetail-shaped cut-out (12).

12. Conveyor belt or conveyor belt segment (1, 2) according to claims 10 and 11, **characterised in that** each crossbar (10) comprises a dovetail-shaped projection (13) and a dovetail-shaped cut-out (12) on the side facing away from the flexible belt element (6).

13. Agricultural harvester for harvesting agricultural field crops or similar crops, comprising at least one apparatus for processing and/or conveying the field crops, **characterised in that** the apparatus for processing and/or conveying (18) the field crops comprises at least one conveyor belt or conveyor belt segment (1, 2) according to the features of claims 1 to 12, to which rod elements (22) that are oriented at least approximately transversely to the running direction of the conveyor belt or conveyor belt segment (1, 2) are attached.

14. Agricultural harvester for harvesting agricultural field crops according to claim 13, **characterised in that** the apparatus for processing and/or conveying (18) is designed to compress gathered crops into roll-shaped bales in a bale-forming chamber (20) by means of a bale-forming device (19) that can be made to revolve.

15. Agricultural harvester for harvesting agricultural field crops according to claims 13 and 14, **characterised in that** the bale-forming device (19) is formed by two conveyor belts (1), between which conveying or pressing bars (21) are arranged.

16. Agricultural harvester for harvesting agricultural field crops according to at least one of claims 13 to 15, **characterised in that** the conveyor belts (1) of the bale-forming device (19) consist of at least two conveyor belt segments (2).

17. Agricultural harvester for harvesting agricultural field crops according to at least one of claims 13 to 16, **characterised in that** the conveying or pressing bars (21) are connected to the conveyor belt segments (2) in a screw-on manner by means of the detachable connecting links (23) at coupling points (5) on two conveyor belt ends or conveyor belt segment ends (3).

## Revendications

1. Bande transporteuse ou segment de bande transporteuse (1, 2) en un matériau élastomère comprenant une couche de support résistante (8) constituée par des câbles en acier (9) orientés dans la direction longitudinale de la bande transporteuse ou du segment de bande transporteuse (1, 2), chaque extrémité de la bande transporteuse ou du segment de bande transporteuse (3) comprenant une traverse dans laquelle les extrémités des câbles en acier (9) sont bloquées par une liaison par la force ou par une liaison par la forme, et les traverses (10) de deux extrémités de la bande transporteuse ou du segment de bande transporteuse (3) peuvent être couplées par l'intermédiaire d'un organe de fermeture amovible (4, 23) selon une association rigide,
**caractérisée en ce que**
l'organe de fermeture amovible (23) permettant l'accouplement des traverses (10) de deux extrémités de la bande transporteuse ou du segment de bande transporteuse (3), comporte des moyens permettant de recevoir et de fixer des éléments de barre (22) orientés au moins approximativement transversalement à la direction de déplacement de la bande transporteuse ou du segment de bande transporteuse (1, 2).

2. Bande transporteuse ou segment de bande transporteuse (1, 2) conforme à la revendication 1,
**caractérisée en ce que**
pour permettre un couplage rigide des traverses (10) de deux extrémités (3) de la bande transporteuse ou du segment de bande transporteuse, l'organe de fermeture rigide (4, 23) entoure au moins partiellement les traverses (10).

3. Bande transporteuse ou segment de bande transporteuse (1, 2) conforme à la revendication 1 ou 2,
**caractérisée en ce que**
pour permettre un couplage des traverses (10) de deux extrémités (3) de la bande transporteuse ou du segment de bande transporteuse, l'organe de fermeture amovible (4, 23) est formé par au moins deux segments (14, 15) qui peuvent être reliés par l'intermédiaire de moyens de fixation.

4. Bande transporteuse ou segment de bande transporteuse (1, 2) conforme à la revendication 3,
**caractérisée en ce que**
les moyens de fixation sont réalisés sous la forme de vis de fixation (16) qui traversent au moins partiellement les traverses (10).

5. Bande transporteuse ou segment de bande transporteuse (1, 2) conforme à au moins l'une des revendications 1 à 4,
**caractérisée en ce que**
pour permettre le couplage des traverses (10) de deux extrémités (3) de la bande transporteuse ou du segment de la bande transporteuse, l'organe de fermeture amovible (4, 23) est formé de deux segments (14, 15) qui permettent d'obtenir une liaison par la forme entre les segments (14, 15) de l'organe de fermeture (4, 23) et les traverses (10).

6. Bande transporteuse ou segment de bande transporteuse (1, 2) conforme à au moins l'une des revendications 1 à 4,
**caractérisée en ce que**
pour permettre le couplage des traverses (10) de deux extrémités de la bande transporteuse ou du segment de bande transporteuse (3), l'organe de fermeture amovible (4, 23) est formé par deux segments, une liaison par la force entre les segments de l'organe de fermeture et les traverses transversales pouvant être obtenue.

7. Bande transporteuse ou segment de bande transporteuse (1, 2) conforme à au moins l'une des revendications 1 à 5,
**caractérisée en ce que**
les segments (14, 15) de l'organe de fermeture amovible (4, 23) comportent sur leurs côtés tournés l'un vers l'autre des évidements (17) dont la dimension est adaptée aux dimensions de deux traverses (10) appliquées l'une contre l'autre.

8. Bande transporteuse ou segment de bande transporteuse (1, 2) conforme à la revendication 7,
**caractérisée en ce que**
les évidements (17) ont une profondeur située dans la plage de 10 à 50 % de l'épaisseur du matériau constitutif des segments (14, 15) de l'organe de fermeture (4, 23).

9. Bande transporteuse ou segment de bande transporteuse (1, 2) conforme à la revendication 1,
**caractérisée en ce que**
les moyens permettant la réception et la fixation d'éléments de barre (22) orientés au moins approximativement transversalement à la direction de déplacement de la bande transporteuse ou du segment de bande transporteuse (1, 2) sont réalisés sous la forme de barrettes (24) dans lesquelles sont insérés les segments (14, 15) de l'organe de fermeture amovible (4).

10. Bande transporteuse ou segment de bande transporteuse (1, 2) conforme à au moins l'une des revendications 1 à 10,
**caractérisée en ce que**
les traverses (10) d'une bande transporteuse ou d'un segment de bande transporteuse (1, 2) comportent des moyens d'assistance au couplage, sur leur face située à l'opposé de l'élément de bande flexible (6).

11. Bande transporteuse ou segment de bande transporteuse (1, 2) conforme à la revendication 10,
**caractérisée en ce que**
les moyens d'assistance au couplage des traverses (10) sont réalisés sous la forme d'une saillie (13) en forme de queue d'aronde qui peut être introduite dans un évidement (12) en forme de queue d'aronde.

12. Bande transporteuse ou segment de bande transporteuse (1, 2) conforme à la revendication 10 ou 11,
**caractérisée en ce que**
chaque traverse (10) comporte sur sa face située à l'opposé de l'élément de la bande flexible (6) une saillie (13) en forme de queue d'aronde et un évidement (12) en forme de queue d'aronde.

13. Moissonneuse agricole permettant de récolter des plantes de culture ou des produits agricoles similaires comprenant au moins un dispositif de traitement et/ou de transfert de plantes de culture,
**caractérisée en ce que**
le dispositif de traitement et/ou de transfert (18) des plantes de culture comporte au moins une bande transporteuse ou un segment de bande transporteuse (1, 2) conforme aux revendications 1 à 12, sur lequel sont montés des éléments de barre (22) orientés au moins approximativement transversalement à la direction de déplacement de la bande transporteuse ou de l'élément de bande transporteuse (1, 2).

14. Moissonneuse agricole permettant de récolter des plantes de culture conforme à la revendication 13,
**caractérisée en ce que**
le dispositif de traitement et/ou de transfert (18) est réalisé pour permettre de comprimer des balles en forme de rouleaux dans une chambre de formation de balles (20) les plantes de culture recueillies au moyen d'un dispositif de formation de balles (19) pouvant être déplacé selon un mouvement de rotation.

15. Moissonneuse agricole permettant de récolter des plantes de culture conforme à la revendication 13 ou 14,
**caractérisée en ce que**
le dispositif de formation de balles (19) est constitué de deux bandes transporteuses (1) entre lesquelles sont montées des barres de transfert et de compression (21).

16. Moissonneuse agricole permettant de récolter des plantes de culture conforme à au moins l'une des revendications 13 à 15,
**caractérisée en ce que**
la bande transporteuse (1) du dispositif de formation de balles (19) est constituée d'au moins deux segments de bande transporteuse (2).

17. Moissonneuse agricole permettant de récolter des plantes de culture conforme à au moins l'une des revendications 13 à 16,
**caractérisée en ce qu'**
au niveau de points de couplage (5) de deux extrémités (3) de la bande transporteuse ou du segment de bande transporteuse, les barres de transfert ou de compression (21) sont reliées aux segments de la bande transporteuse (2) en pouvant être vissées par l'intermédiaire des organes de fermeture amovibles (23).
